# EUROPEAN PATENT SPECIFICATION

(11) **EP 1 711 436 B1**
(45) Date of publication and mention of the grant of the patent: **26.11.2008**
(21) Application number: 01949801.3
(22) Date of filing: 11.07.2001
(51) Int. Cl.: C02F 1/461, B23K 11/20

(54) **METHOD AND METALS TO PRODUCE AN ELECTRODE ANODE TO ELECTROLYZE LIQUID WASTES**
VERFAHREN UND METALLE ZUR HERSTELLUNG EINER ELEKTRODE FÜR DIE ELEKTROLYSE VON ABWASSER
PROCEDE ET METAUX PERMETTANT DE PRODUIRE UNE ELECTRODE ANODE DESTINEE A L'ELECTROLYSE DE DECHETS LIQUIDES

(30) Priority: 13.07.2000 GR 2000100233
(43) Date of publication of application: 18.10.2006
(73) Proprietor: Ninolakis, Markos, 73 200 Chania (GR)
(72) Inventor: Ninolakis, Markos, 73 200 Chania (GR)
(74) Representative: Madgwick, Paul Roland
(86) International application number: PCT/GR2001/000031
(87) International publication number: WO 2002/004355

(56) References cited:
- EP-A- 0 383 470
- FR-A- 2 102 633
- US-A- 2 719 797
- US-A- 3 443 055
- US-A- 3 547 600
- US-A- 3 905 828
- US-A- 4 236 992
- US-A- 4 515 673

## Description

My invention refers to the method of bonding different alloys of metals to produce an anode capable to electrolyze liquid wastes.
Specifically in a main body of titanium or alloy of titanium/palladium, or titanium that enclose a copper bar or a bar of aluminum, or an alloy of titanium/palladium that enclose a copper bar or a bar of aluminum. Presence of mechanical pressure and suitable temperature produced from an electric welding device and noble inert gas or in a vacuum surround the coat and weld of two layers in the main substrate is achieved. The first layer is from tantalum or niobium or hafnium or zirconium or alloys of them and the second one from platinum or rhodium or iridium or ruthenium or palladium or zirconium or alloys of theme.
The said anode has very durable operating capacity and produce strong oxidants.

### LEVEL OF CONVENTIONAL TECHNOLOGY

The known today electrodes use titanium or niobium anode where the main substrate is coated by electroplating method or by layers with metal oxides of the VIII group of the periodic elements table. The efficient life of these anodes is short and cannot support intense flow of electric current for a long period of time. The main substrate is affected from electrochemical corrosion, especially by the production of nascent chlorine in the upper layers. An example of an electroplated electrode is seen in document DE 2719797.

Document US 3,547,600 discloses a process whereby two foil layers are applied to the surface of a flat plate electrode. Pressure in the range 107-536 kg per linear cm (600-3000 lbs per linear inch) are applied by a small diameter roller together with electric power in excess of 30 kva. In one example the roller is advanced at a rate of 30.5 cm/minute, i.e. 12 inches per minute.

### ADVANTAGE OF THE INVENTION.

The anode I invented can due to the bonding method and the alloys used support strong flows of electric power, 380V and 1000Amp without any disintegration of the main substrate. And at the same time due to the average of high voltage, more than 15volts, a production of strong oxidants as H₂, Cl₂, ClO₃, O₃, O₂, H₂O₂, [OH], [CLOH], [O] will take place which are the perfect elements to eliminate the liquid wastes.

### PRESENTATION OF THE INVENTION

The invention is as defined in appended claim 1, with the dependent claims defining optional features. An embodiment uses a

main substrate of titanium or an alloy of titanium-palladium or titanium that encloses a copper bar or an aluminum bar or an alloy of titanium-palladium that encloses a copper bar or aluminum one which by mechanical treatment gets a coarse surface. After it is cleaned chemically from any oxidants that may stick to the surface, it is put in a specially made device composed from a stable bench and a moving precision unit which contain a welding device with a moving mechanism including the control instruments for temperature and electric density flow as well the injection unit for the noble inert gas.
The main substrate aligned on the stable bench can rotate with a mechanical device on its axis according to the desired rotation. The foil layers advance towards the substrate so that there is a firm contact. The tantalum or niobium or zirconium or hafnium foil or alloys of them in a thickness of 0,5mm or down to 0,015mm lays in contact with the substrate, followed by a second foil in the same range of thickness of platinum or rhodium or iridium or ruthenium or palladium or zirconium or alloys of theme. The assemblage of substrate and foil layers comes in contact with the moving welding device, where e edge is made by a rotating tungsten rod of small diameter.
The welding edge trough the tungsten rod provide a mechanical vertical pressure to the above layers and substrate from 1 to 9kg/cm² and a discharge of electric power of 0,05 up to 6volts and a amperage suitable to provide a current in the range of 1 to 15kva/cm² with a parallel supply of inert noble gas to avoid oxidation cavities.
The temperature achieved must be between 100 and 500 °C bellow the melting point of the substrate, which is sufficient to soften the metals. The mechanical pressure applied achieves with the adhesion of the metal foils to the substrate without any loss of their specific characteristics. The welding edge during the said operation moves in the direction of the substrate axis and always perpendicular with a speed of 15cm/min. The produced heat is dissipated with the movement of the welding unit.

### EXAMPLE

A titanium bar 2,5cm of diameter and 15cm long is roughened by sand blasting and chemically cleaned from any oxidants and organic residues with oxalic acid.
The prepared bar is placed on the specially made device and in direct contact with two independent foils where the fist one is niobium 0,025mm thick and the second is platinum 0,025mm thick.
On the above assemble of titanium, niobium, platinum, through the welding unit I apply a pressure of 5kg/cm² and an electric discharge of direct current 1,5volts and an suitable amperage to provide 8kva/ cm² and at the same time supply through the nozzle with argon gas.
The developed temperature is 100 to 500 °C below the melting point of the titanium that is 1675 °C. By moving the welding edge of the device always vertical to the axis of the assemble titanium, niobium, platinum with a speed of 15cm/min a successful softening of the titanium is achieved and a total engagement of the applied foil layers niobium and platinum to the titanium is reached.
The welding device rotates the titanium bar so it will have a uniform cover of niobium and platinum.

## Claims

1. A method of producing an anode electrode for the electrolysis of liquids by bonding two thin foils to the surface of a bar of titanium or titanium-palladium alloy comprising:
taking a first one of said foils consisting of tantalum or niobium or zirconium or hafnium foil or alloys of them, and a second one of said foils consisting of platinum or rhodium or iridium or ruthenium or palladium or zirconium or alloys thereof;
applying the foils to the bar;
rotating the bar and applying a vertical mechanical pressure and topical temperature whereby a welding edge moves in the direction of and perpendicular to the axis of the bar;
wherein the method is conducted in the presence of a noble gas or in a vacuum.

2. The method as described in claim 1, wherein the bar covers aluminium.

3. The method as described in claim 1, wherein the bar covers copper.

4. The method as described in claim 1, where the first layer is closer to the bar and is of tantalum or niobium or zirconium or hafnium foil or alloys of them 0,5mm to 0,015mm thick.

5. The method as described in claim 1, wherein the second layer is the layer further from the bar and is platinum or rhodium or iridium or ruthenium or palladium or zirconium or alloys of them 0,5mm to 0,015mm thick.

6. The method as described in claim 1, wherein the vertical pressure applied to the assemblage of the bar and the layers is from 1 to 9kg/cm².

7. The method as described in claim 1, wherein the direct electric voltage applied is 0,05V to 6V and the amperage suitable to provide 1,5 to 15 Kva/cm²

8. The method as described in claim 1, wherein the temperature developed by the application of the direct electric current is 100 to 500 C below the melting point of the bar.

9. The method as described in claim 1, wherein the noble gas is Argon.

## Patentansprüche

1. Verfahren zum Herstellen einer Anode für die Elektrolyse von Flüssigkeiten durch Binden zweier dünner Folien an die Oberfläche eines Stabs aus Titan oder Titan-Palladium-Legierung mit folgenden Schritten:
Bereitstellen einer ersten der Folien aus Tantal oder Niob oder Zircon oder Hafnium oder Legierungen derselben und einer zweiten der Folien aus Platin oder Rhodium oder Iridium oder Ruthenium oder Palladium oder Zircon oder Legierungen derselben;
Auftragen der Folien auf den Stab; und
Drehen des Stabs und Aufbringen eines vertikalen mechanischen Drucks und einer örtlichen Temperatur, wobei eine Schweißkante in der Richtung der und rechtwinklig zur Stabachse sich bewegt;
wobei man das Verfahren in einem Edelgas oder einem Vakuum durchführt.

2. Verfahren nch Anspruch 1, bei dem der Stab Aluminium bedeckt.

3. Verfahren nach Anspruch 1, bei dem der Stab Kupfer bedeckt.

4. Verfahren nach Anspruch 1, bei dem die erste Schicht näher am Stab liegt und aus Tantal- oder Niob- oder Zircon- oder Hafnium-Folie oder Legierungen derselben in eine Dicke von 0,5 mm bis 0,015 mm besteht.

5. Verfahren nach Anspruch 1, bei dem die zweite Schicht weiter vom Stab entfernt liegt und aus Platin oder Rhodium oder Iridium oder Ruthenium oder Palladium oder Zircon oder Legierungen derselben in eine Dicke von 0,5 mm bis 0,015 mm besteht.

6. Verfahren nach Anspruch 1, bei dem der auf die Anordnung aus dem Stab und den Schichten aufgebrachte vertikale Druck 1 kg/cm² bis 9 kg/cm² beträgt.

7. Verfahren nah Anspruch 1, bei dem die angelegte Gleichspannung 0,05 V bis 6 V beträgt und der Strom geeignet ist, 1,5 kVA/cm² bis 15 kVA/cm² zu erzeugen.

8. Verfahren nach Anspruch 1, bei dem die durch das Aufbringen des elektrischen Gleichstroms erzeugte Temperatur 100 °C bis 500 °C unter dem Schmelzpunkt des Stabs liegt.

9. Verfahren nach Anspruch 1, bei dem das Edelgas Argon ist.

## Revendications

1. Procédé de production d'une électrode anodique pour l'électrolyse de liquides en assemblant deux films minces à la surface d'une barre de titane ou d'alliage de titane-palladium, comprenant :
prendre un premier desdits films constitué d'un film de tantale ou de niobium ou de zirconium ou d'hafnium ou de leurs alliages, et un second desdits films constitué de platine ou de rhodium ou d'iridium ou de ruthénium ou de palladium ou de zirconium ou de leurs alliages ;
appliquer les films sur la barre ;
faire tourner la barre et appliquer une pression mécanique verticale et une température topique de sorte qu'un bord de soudage se déplace dans la direction de l'axe de la barre et perpendiculairement à celui-ci ;
le procédé étant mis en oeuvre en présence d'un gaz noble ou sous vide.

2. Procédé selon la revendication 1, dans lequel la barre recouvre de l'aluminium.

3. Procédé selon la revendication 1, dans lequel la barre recouvre du cuivre.

4. Procédé selon la revendication 1, dans lequel la première couche est plus proche de la barre et est constituée d'un film de tantale ou de niobium ou de zirconium ou d'hafnium ou de leurs alliages, de 0,5 mm à 0,015 mm d'épaisseur.

5. Procédé selon la revendication 1, dans lequel la seconde couche est la couche la plus éloignée de la barre et est du platine ou du rhodium ou de l'iridium ou du ruthénium ou du palladium ou du zirconium ou leurs alliages, de 0,5 mm à 0,015 mm d'épaisseur.

6. Procédé selon la revendication 1, dans lequel la pression verticale appliquée à l'assemblage de la barre et des couches est de 1 à 9 kg/cm².

7. Procédé selon la revendication 1, dans lequel la tension électrique continue appliquée est de 0,05 V à 6 V et l'ampérage est adapté pour délivrer de 1,5 à 15 Kva/cm².

8. Procédé selon la revendication 1, dans lequel la température développée par l'application du courant électrique continu est de 100 à 500 °C inférieure au point de fusion de la barre.

9. Procédé selon la revendication 1, dans lequel le gaz noble est de l'argon.
